# FASCICULE DE BREVET EUROPEEN

(11) **EP 0 530 057 B1**
(45) Date de publication et mention de la délivrance du brevet: **09.03.1994**
(21) Numéro de dépôt: 92401780.9
(22) Date de dépôt: 25.06.1992
(51) Int. Cl.: B60T 8/18, B60T 11/34

(54) **Correcteur de freinage**
Bremskraftregler
Proportioning valve

(30) Priorité: 29.08.1991 FR 9110719
(43) Date de publication de la demande: 03.03.1993
(73) Titulaire: ALLIEDSIGNAL EUROPE SERVICES TECHNIQUES, 93700 Drancy (FR)
(72) Inventeur: Castel, Philippe, Bendix Europe Serv. techn., F-93700 Drancy (FR)
(74) Mandataire: Bentz, Jean-Paul

(56) Documents cités:
- DE-A- 2 213 367
- DE-A- 3 441 751
- FR-A- 2 230 529
- GB-A- 1 424 945

## Description

La présente invention concerne les correcteurs de freinage généralement utilisés dans les circuits de freinage des véhicules automobiles pour appliquer aux moteurs de frein des roues arrière une pression inférieure à celle appliquée aux moteurs de frein des roues avant à partir d'un certain seuil de pression dit point d'intervention primaire.

Il est souhaitable, en outre, qu'un second seuil de pression dit point'd'intervention secondaire, soit déterminé, au-delà duquel la pression appliquée aux moteurs de frein des roues arrière reste sensiblement constante lorsque la pression appliquée aux moteurs de frein des roues avant augmente encore.

Le document DE-A-3 441 751 propose une solution à ce problème. Toutefois cette solution n'est pas satisfaisante du tout et ne permet pas d'obtenir les courbes représentées sur ce document. En effet, au delà du point d'intervention primaire, toute augmentation de pression dans la chambre d'entrée se traduit par un effort exercé sur le ressort de l'aiguille contrôlant la fermeture du clapet. Mais cet effort ne se traduit en compression du ressort, donc en déplacement de l'aiguille que si l'équipage mobile, et en particulier le piston de compensateur peuvent se déplacer. Ceci n'est possible que si l'absorption en liquide du circuit situé en aval de la valve est supérieure au volume de déplacement du piston. Or, il est une nécessité constante dans la réalisation des installations de freinage de minimiser cette absorption qui crée des courses peu agréables au niveau des commandes. Il en résulte que le point d'intervention secondaire n'est pas déterminé par une valeur de pression d'entrée du système, mais par une absorption de liquide dans le circuit, le point de coupure est alors dépendant de paramètres non contrôlables, comme l'usure des freins, les températures des pièces, et les teneurs en impuretés (par exemple eau) du liquide de freinage, ce qui est tout-à-fait contraire à la sécurité.

La présente invention a pour but d'obvier à cet inconvénient.

L'invention concerne donc un correcteur de freinage interposé entre une source de pression hydraulique et un circuit de freinage de véhicule automobile, du type comportant un boîtier pourvu d'un alésage, un piston coulissant dans le dit alésage et y délimitant une chambre d'entrée et une chambre de sortie reliées respectivement à une source de pression et au circuit de freinage, les dites chambres communiquant entre elles par l'intermédiaire d'un passage ménagé dans le dit piston, une soupape étant montée dans le dit passage et élastiquement sollicitée vers le fond de la chambre de sortie pour être en appui étanche contre un siège formé sur le piston, le dit piston étant lui-même sollicité vers le fond de la dite chambre de sortie, par une force dépendant de la charge du véhicule dans une position de repos pour laquelle la soupape se trouve écartée de son siège par une aiguille prenant appui sur le dit fond de la chambre de sortie, un ressort précontraint étant placé entre l'aiguille et le fond de la chambre de sortie.

Pour obvier à l'inconvénient précité, le correcteur de freinage de l'invention est essentiellement caractérisé en ce que le dit piston est réalisé en deux parties, la première partie coulissant dans le dit alésage du boîtier et la seconde partie coulissant dans un alésage borgne pratiqué dans la dite première partie et comportant le dit passage et le dit siège, la dite seconde partie étant élastiquement sollicitée au repos pour être en appui contre la dite première partie en direction de la dite chambre d'entrée, cette dernière communiquant avec une chambre ménagée entre la partie borgne du dit alésage de ladite première partie et la dite seconde partie de manière que lors de l'accroissement de la pression dans la chambre d'entrée au delà d'une limite déterminée, la seconde partie se déplace vers le fond de la chambre de sortie tandis que la première partie se déplace en sens opposé pour garder constant le volume de la chambre de sortie, et un moyen de butée interdisant le déplacement relatif des dites première et seconde parties à partir d'un seuil déterminé de la différence des pressions régnant dans les chambres d'entrée et de sortie.

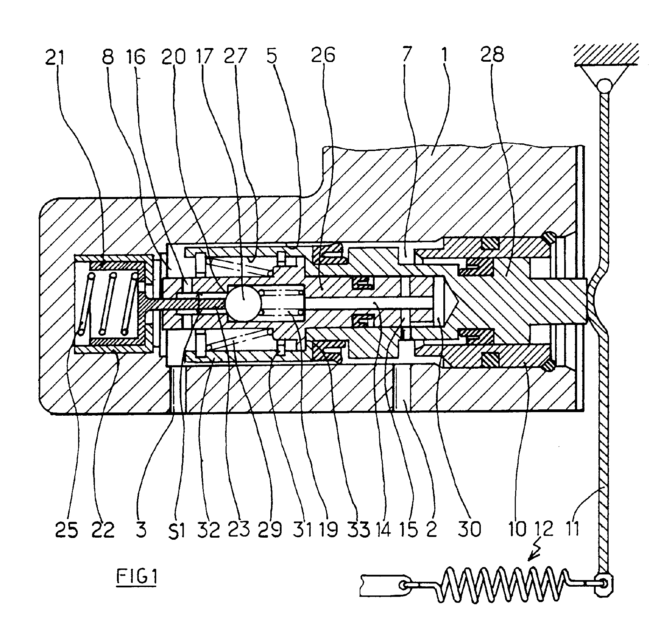

L'invention sera mieux comprise et d'autres buts, avantages et caractéristiques de celle-ci apparaîtront plus clairement à la lecture de la description qui suit d'un mode de réalisation donnée à titre non limitatif et à laquelle est jointe une planche de dessin sur laquelle:
- la Figure unique représente schématiquement en coupe un correcteur de freinage conforme à l'invention.

En référence maintenant à la Figure, le correcteur comporte un boîtier 1 dans lequel a été pratiqué un alésage 5. Une chambre d'entrée 7 communique par un conduit 2 avec une source de pression telle qu'un maître-cylindre (non représenté), et une chambre de sortie 8 communique par un conduit 3 avec au moins un moteur de frein par exemple associé à une roue arrière (non représentés). Les deux chambres 7, 8 communiquent entre elles par un passage 14, 15, 16 ménagé dans un piston réalisé en deux parties comme on va le voir plus en détail ci-après.

Une bille 17 formant clapet et ayant son siège 20 sur le piston est sollicitée en appui sur ce siège 20 par un ressort 19. Au repos, cette bille 17 se trouve écartée de son siège par une aiguille 23 sollicitée en sens inverse par un ressort précontraint 25 s'appuyant au fond de la chambre de sortie 8, une butée 22 étant prévue pour limiter le déplacement de l'aiguille 23. Cette aiguille 23 présente une jupe 21 permettant de guider l'aiguille 23 dans le passage 14.

Comme indiqué précédemment, le piston est réalisé en deux parties séparées l'une de l'autre 28, 26. La première partie 28 coulisse dans l'alésage 5 du boîtier 1 et reçoit, à son extrémité, la force transmise par un levier 11 associé à un capteur 12 de la charge du véhicule de façon conventionnelle. Une douille 10 est prévu pour assurer un coulissement étanche de la partie de plus petit diamètre de ce piston 28. Un alésage étagé borgne 27 est pratiqué dans la première partie 28 en regard de la chambre de sortie, et reçoit en coulissement la seconde partie 26 du piston.

Un ressort 29 disposé entre les première et seconde parties 28, 26 du piston tend à appliquer ces dernières l'une contre l'autre au repos, un épaulement 33 étant prévu à cet effet.

La seconde partie 26 du piston porte le siège 20 du clapet à bille 17, et comporte le passage central 14. Ce dernier est en communication directe avec une chambre 30 ménagée entre la partie borgne de l'alésage 27 pratiqué dans la première partie 28 et la seconde partie 26.

La première partie 28 présente donc une jupe 32 se prolongeant dans la chambre de sortie 8, et un moyen de butée 31 interdit un déplacement relatif trop important des première et seconde parties 28, 26.

Le fonctionnement est le suivant.

Au repos, l'ensemble se trouve dans la position représentée. Lors d'un freinage, la pression dans la chambre d'entrée 7 augmente. Le clapet étant alors ouvert, la pression croit dans la chambre de sortie 8, tendant à déplacer le piston vers la droite (sur la Figure). Du fait de l'épaulement 33 et du ressort 29, c'est l'ensemble des deux parties du piston qui se meut ainsi pendant cette phase.

Lorsque la pression dans la chambre d'entrée 7 augmente, on atteint le point d'intervention primaire pour lequel le clapet se ferme pour la première fois. Ensuite, en fonction de la raideur du ressort 25, l'aiguille 23 tend à s'effacer, sous l'effet de la pression s'exerçant sur la section S1 du clapet 17 ce qui confirme la fermeture du clapet pour une pression déterminée dite pression d'intervention secondaire.

A partir de cet instant, si la pression augmente encore dans la chambre d'entrée 7, elle reste constante dans la chambre de sortie 8. En effet, toute surpression va alors tendre à écarter l'une de l'autre les deux parties 28, 26 du piston, de manière à maintenir constant le volume de la chambre de sortie 8, jusqu'à ce que la seconde partie 26 du piston vienne en butée contre la butée 22, la première partie 28 étant alors en butée contre la deuxième partie 26 par l'intermédiaire d'un jonc d'arrêt 31 faisant office de butée.
Il n'y a donc plus ici aucune possibilité de surpression néfaste dans le circuit hydraulique relié par le conduit 3 au moteur de frein arrière du véhicule.

Le correcteur se comporte donc tout à fait comme un compensateur à limiteur sans présenter l'effet pervers précité.

## Revendications

1. Correcteur de freinage interposé entre une source de pression hydraulique et un circuit de freinage de véhicule automobile, du type comportant un boîtier (1) pourvu d'un alésage (5), un piston coulissant dans le dit alésage (5) et y délimitant une chambre d'entrée (7) et une chambre de sortie (8) reliées respectivement à une source de pression et au circuit de freinage, les dites chambres (7, 8) communiquant entre elles par l'intermédiaire d'un passage (14) ménagé dans le dit piston, une soupape (17) étant montée dans le dit passage (14) et élastiquement sollicitée vers le fond de la chambre de sortie (8), pour être en appui étanche contre un siège (20) formé sur le piston, le dit piston étant lui-même sollicité vers le fond de la dite chambre de sortie (8), par une force dépendant de la charge du véhicule, dans une position de repos pour laquelle la soupape (17) se trouve écartée de son siège (20) par une aiguille (23) prenant appui sur le dit fond de la chambre de sortie (8) un ressort précontraint (25) étant placé entre l'aiguille (23) et le fond de la chambre de sortie (8), caractérisé en ce que le dit piston est réalisé en deux parties (28, 26), la première partie (28) coulissant dans le dit alésage (5) du boîtier (1) et la seconde partie (26) coulissant dans un alésage (27) borgne pratiqué dans la dite première partie (28) et comportant le dit passage (14) et le dit siège (20), la dite seconde partie (26) étant élastiquement sollicitée au repos pour être en appui contre la dite première partie (28) en direction de la dite chambre d'entrée (7), cette dernière communiquant avec une chambre (30) ménagée entre la partie borgne du dit alésage (27) de ladite première partie (28) et la dite seconde partie (26) de manière que lors de l'accroissement de la pression dans la chambre d'entrée au delà d'une limite déterminée, la seconde partie se déplace vers le fond de la chambre de sortie tandis que la première partie se déplace en sens opposé pour garder constant le volume de la chambre de sortie, et un moyen de butée (31) interdisant le déplacement relatif des dites première et seconde parties (28, 26) à partir d'un seuil déterminé de la différence des pressions régnant dans les chambres d'entrée (7) et de sortie (8).

2. Correcteur de freinage selon la revendication 1, caractérisé en ce que la dite première partie (28) comporte une jupe (32) se prolongeant dans la dite chambre de sortie (8).

## Claims

1. Brake regulator interposed between a hydraulic pressure source and a motor vehicle brake system, of the type comprising a housing (1) provided with a bore (5), a piston sliding in said bore (5) and delimiting therein an inlet chamber (7) and an outlet chamber (8) connected respectively to a pressure source and to the brake system, said chambers (7, 8) communicating with one another via a passage (14) made in said piston, a valve (17) being mounted in said passage (14) and resiliently pushed towards the bottom of the outlet chamber (8) so as to bear in a leaktight manner against a seating (20) formed on the piston, said piston itself being pushed towards the bottom of said outlet chamber (8), by a force dependent on the vehicle load, in a rest position for which the valve (17) finds itself separated from its seating (20) by a needle (23) bearing against said bottom of the outlet chamber (8), a prestressed spring (25) being placed between the needle (23) and the bottom of the outlet chamber (8), characterized in that said piston is constructed in two parts (28, 26), the first part (28) sliding in said bore (5) of the housing (1) and the second part (26) sliding in a blind bore (27) made in said first part (28) and comprising said passage (14) and said seating (20), said second part (26) being resiliently pushed, at rest, so as to bear against said first part (28), in the direction of said inlet chamber (7), the latter communicating with a chamber (30) made between the blind part of said bore (27) of said first part (28) and said second part (26), so that when the pressure in the inlet chamber increases beyond a determined limit, the second part moves towards the bottom of the outlet chamber while the first part moves in the opposite direction in order to keep the volume in the outlet chamber constant, and a stop means (31) prohibiting the relative displacement of said first and second parts (28, 26) starting from a given threshold of the difference in the pressures prevailing in the inlet chamber (7) and outlet chamber (8).

2. Brake regulator according to Claim 1, characterized in that said first part (28) comprises a skirt (32) extending into said outlet chamber (8).

## Patentansprüche

1. Zwischen eine Hydraulikdruckquelle und einen Bremskreis eines Kraftfahrzeugs eingesetzter Bremskraftregler vom Typ mit einem mit einer Bohrung (5) versehenen Gehäuse (1), einem in der Bohrung (5) gleitenden und dort eine Eingangskammer (7) und eine Ausgangskammer (8) abgrenzenden Kolben, die mit einer Druckquelle bzw. dem Bremskreis verbunden sind, wobei die Kammern (7, 8) über einen in dem Kolben (14) vorgesehenen Durchgang (14) miteinander in Verbindung stehen, einem Ventil (17), das in dem Durchgang (14) angebracht und zum Boden der Ausgangskammer (8) hin elastisch vorgespannt ist, um in dichter Anlage gegen einen an dem Kolben ausgebildeten Sitz (20) zu sein, wobei der Kolben seinerseits in einer Ruhestellung durch eine von der Ladung des Fahrzeugs abhängige Kraft zu dem Boden der Ausgangskammer (8) hin elastisch vorgespannt ist, bei welcher das Ventil (17) durch eine Nadel (23) von seinem Sitz (20) entfernt ist, die an dem Boden der Ausgangskammer (8) anliegt, wobei eine vorbelastete Feder (25) zwischen der Nadel (23) und dem Boden der Ausgangskammer (8) angebracht ist, dadurch gekennzeichnet, daß der Kolben in zwei Teilen (28, 26) realisiert ist, wobei der erste Teil (28) in der Bohrung (5) des Gehäuses (1) gleitet und der zweite Teil (26) in einer in dem ersten Teil (28) vorgesehenen Blindbohrung (27) gleitet und den Durchgang (14) und den Sitz (20) aufweist, wobei der zweite Teil (26) in der Ruhestellung elastisch vorgespannt ist, um in Anlage gegen den ersten Teil (28) in Richtung der Eingangskammer (7) zu sein, die mit einer zwischen dem Blindteil der Bohrung (27) des ersten Teils (28) und dem zweiten Teil (26) vorgesehenen Kammer (30) in Verbindung steht, so daß sich beim Ansteigen des Drucks in der Eingangskammer über einen bestimmten Grenzwert der zweite Teil zu dem Boden der Ausgangskammer hin verschiebt, während sich der erste Teil in der entgegengesetzten Richtung verschiebt, um das Volumen der Ausgangskammer konstant zu halten, und wobei ein Anschlagmittel (31) die Relativverschiebung des ersten und des zeiten Teils (28, 26) ab einem bestimmten Schwellenwert für die Differenz der in der Eingangskammer (7) und der Ausgangskammer (8) herrschenden Drücke untersagt.

2. Bremskraftregler nach Anspruch 1, dadurch gekennzeichnet, daß der erste Teil (28) eine sich in die Ausgangskammer (8) verlängernde Schürze (32) aufweist.
